# EUROPEAN PATENT SPECIFICATION

(11) **EP 4 082 849 B1**
(45) Date of publication and mention of the grant of the patent: **10.09.2025**
(21) Application number: 22170520.5
(22) Date of filing: 28.04.2022
(51) Int. Cl.: B60W 30/08, G01S 19/45, G08G 1/16, B62D 15/02

(54) **SYSTEM AND METHOD OF PROVIDING EVASIVE STEERING ASSIST**
SYSTEM UND VERFAHREN ZUR BEREITSTELLUNG VON AUSWEICHLENKUNGSUNTERSTÜTZUNG
SYSTÈME ET PROCÉDÉ POUR FOURNIR UNE ASSISTANCE À LA DIRECTION ÉVASIVE

(30) Priority: 28.04.2021 US 202163180835 P
(43) Date of publication of application: 02.11.2022
(73) Proprietor: Aptiv Technologies AG, 8200 Schaffhausen (CH)
(72) Inventor: ZHANG, Guoguang, Westfield, 46074 (US); SUGIARTO, Tanto, West Lafayette, 47906 (US); KOSIAK, Walter K., Kokomo, 46902 (US)
(74) Representative: Manitz Finsterwald Patent- und Rechtsanwaltspartnerschaft mbB

(56) References cited:
- JP-A- 2016 206 149
- KR-A- 20190 060 575
- US-A1- 2018 281 857

## Description

### BACKGROUND

This disclosure is related generally to systems and methods of providing evasive steering assist and in particular to evasive steering assist without the presence of lane markers.

Evasive Steering Assist (ESA) amplifies steering maneuvers in the presence of imminent frontal collisions. For example, ESA may be initiated in response to a determination that a steering maneuver initiated by the driver is insufficient to avoid collision, wherein the ESA response may be in the form of additional steering torque in the direction of the driver input. The additional steering torque is overlaid on the driver-applied steering torque to evade the primary object. As a result, the host vehicle will move around the obstacle. Most ESA features utilize lane markers to determine the host vehicle's location, direction and/or motion. In situations in which lane markers are not present, ESA features cannot be initiated. It would be beneficial to provide ESA features capable of being implemented in situations in which lane markers are not present.

US 2018/281857 A1 discloses a method for controlling a vehicle to avoid a collision between the vehicle and an object. A slip angle and a yaw rate of the vehicle is determined at time-varying locations of the vehicle. Further, a lateral acceleration is generated based on the determined slip angle and yaw rates to avoid a collision between the vehicle and an object.

### SUMMARY OF THE INVENTION

According to one aspect, a method of providing evasive steering assist (ESA) includes storing yaw rate data related to a host vehicle, wherein yaw rate data includes a yaw rate stored at each time step from an initial time step [0] to a current time step [*n*]*.* The method further includes determining whether to initiate ESA, wherein in response to a determination to initiate ESA, the method includes calculating a current position, a current heading angle, a destination position, and a destination heading angle, wherein the stored yaw rate data is utilized to determine the current heading angle and the destination heading angle. The method further includes generating an evasive steering assist (ESA) output based on the current position, the current heading angle, the destination position, and the destination heading angle.

According to another aspect, a system for providing evasive steering assist (ESA) to a host vehicle includes a first input for receiving yaw rate data and an output for communicating an ESA output. In addition, the system includes an evasive steering controller configured to store yaw rate data over a period of time, to initiate ESA based on one or more inputs. In response to a determination to initiate ESA, the evasive steering controller utilizes the stored yaw rate data to determine a current position and a current heading angle of the host vehicle, utilizes the stored yaw rate data to determine a destination heading angle, and utilizes the current position to determine a destination position, wherein based on the current position, the current heading angle, the destination position, and the destination heading angle the evasive steering controller generates an evasive steering assist (ESA) output.

### DESCRIPTION OF THE DRAWINGS

Figure 1 is a block diagram of an evasive steering assist (ESA) system according to some embodiments.
Figure 2 is a block diagram illustrating visually utilization of yaw rate over a length of time to determine orientation of the host vehicle according to some embodiments.
Figure 3 is a block diagram of a queue utilized to store yaw rates according to some embodiments.
Figure 4 is a flowchart illustrating steps implemented by the ESA system according to some embodiments.
Figure 5 is a flowchart illustrating steps implemented by the ESA system to determine the destination position and destination heading angle of the host vehicle and to calculate the current position and heading angle of the host vehicle according to some embodiments.

### DETAILED DESCIRPTION

Disclosed herein is a system and method of providing evasive steering assist (ESA). In particular, the ESA system includes a queue for storing yaw rates associated with the vehicle over a given time period. In some embodiments, the yaw rate queue is a recirculating queue in which new values replace the oldest value in the queue. The yaw rate queue can be utilized to determine the current heading angle and the destination heading angle, which are utilized in calculating the additional steering torque provided as part of the ESA operation.

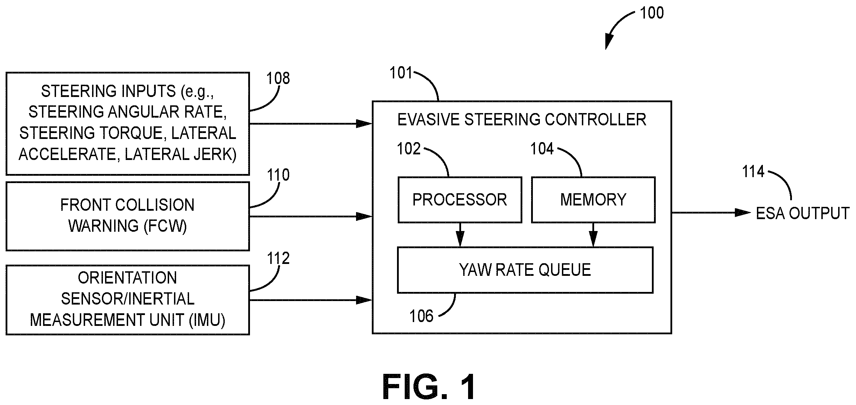

Figure 1 is a block diagram of an evasive steering assist (ESA) system 100 according to some embodiments. The ESA system 100 may include an evasive steering controller 101, which may include a processor 102 and memory 104. In some embodiments, the evasive steering controller 101 receives one or more inputs and in response to these inputs generates an ESA output 114. In some embodiments, the evasive steering controller is implemented in hardware, software, or a combination thereof. For example, processor 102 may be a microprocessor capable of executing instructions stored on memory 104 to implement the various functions. In other embodiments, processor 102 may be implemented as a programmable device such as a field programmable gate array (FPGA). Likewise, the yaw rate queue may be implemented in hardware, software, or a combination thereof. In some embodiments, the yaw rate queue 106 may be a recirculating queue in which the queue is fixed in length, with the oldest data being overwritten by the newest data. In other embodiments, other types of queues may be implemented by processor 102 and memory 104. In some embodiments, ESA system 100 utilizes inputs including steering inputs 108 (e.g., steering torque, steering angle rate, lateral jerk, and/or lateral acceleration), front collision warning (FCW) inputs 110, and yaw rate data 112 (for storage in yaw rate queue 106). As described in more detail below, steering inputs 108 are utilized to determine whether the driver has initiated evasive steering. In some embodiments, the steering input may be a binary input indicating whether evasive steering has been initiated by the driver (i.e., true or false). In other embodiments, steering inputs 108 may include raw data (e.g., steering torque, steering angle rate, lateral jerk, and/or lateral acceleration) that evasive steering controller 101 analyzes to detect an evasive steering event. In other embodiments, the steering input 108 may include information regarding a steering maneuver, including direction and magnitude of the steering maneuver, wherein evasive steering controller 101 utilizes the received input to determine whether the driver has initiated an evasive steering maneuver. In some embodiments, front collision warning input 110 is generated by a front collision detection system (not shown). The front collision detection system may use radar, laser (e.g., light detection and ranging or LiDAR systems), cameras, or a combination therefore to detect an imminent front collision. The FCW input 110 may be binary input indicating either the presence or absence of an imminent front collision, or may provide may specific information regarding the time to impact, distance to impact, size/shape of the object, etc. Evasive steering controller 101 may utilizes the received data to determine whether the data is indicative of an imminent front collision.

As described in more detail below, in some embodiments the steering inputs 108 and FCW inputs 110 are utilized by the evasive steering controller 101 to detect an evasive maneuver. In response to a detected evasive maneuver and detected forward collision, ESA system 100 may generate an ESA output 114 that results in additional steering torque being overlaid on the driver applied steering torque to assist the driver in avoiding collision with the object.

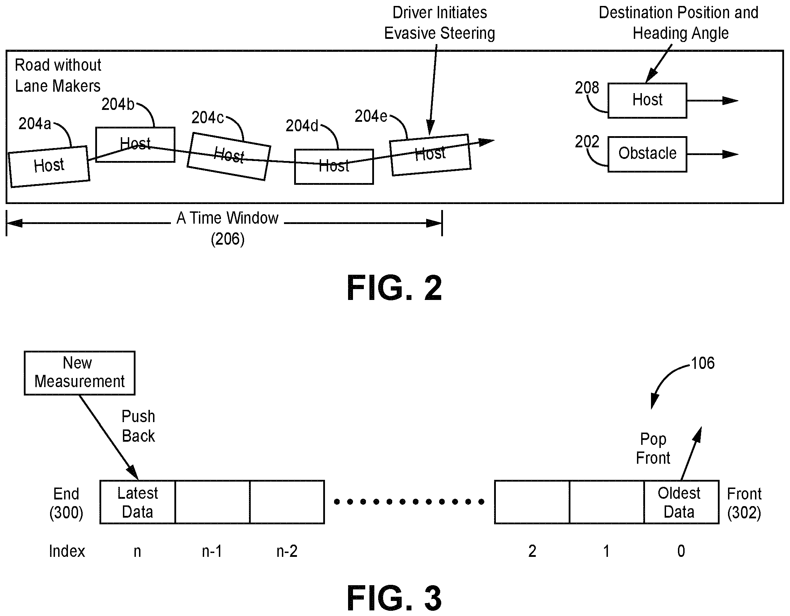

In situations in which lane markers are not present to provide heading angle to the host vehicle, then the yaw rate queue 106 may be utilized to determine the heading angle (and position) of the host vehicle. Heading angle refers to the direction of travel of the host vehicle. Part of the evasive maneuver includes determining a desired position and heading angle of the host vehicle at the conclusion of the ESA action (for example, alongside the detected collision object and traveling approximately along the same heading as before). In some embodiments, the yaw rate data stored in the yaw rate queue 106 is utilized to make these determinations, as discussed in more detail with respect to Figures 3-6.

Figure 2 is a block diagram illustrating visually the utilization of yaw rate over a length of time to determine orientation of the host vehicle 200 to aid in evading an obstacle 202 according to some embodiments. In the block diagram shown in Figure 2, the yaw rate of host vehicle 200 is measured at a plurality of instances over a time period. For example, in the embodiment shown in Figure 2 the yaw rate of the host vehicle is calculated at a five discrete instances 204a, 204b, 204c, 204d, and 204e within time window 206. In other embodiments, any number of yaw rate calculations may be made within a given time window. In some embodiments, a destination position and destination heading angle is determined by the ESA system 100 (indicated by host position 208 located safely alongside the obstacle 202). As described in more detail below, without lane markers, the yaw rate stored in the yaw rate queue 106 is utilized to calculate the destination position and destination heading angle and the current position and current heading angle.

In some embodiments, the yaw rate queue 106 is a fixed length queue corresponding with the time window 206 (e.g., 3 seconds, 4 seconds). For example, Figure 3 is a block diagram illustrating visually a fixed length yaw rate queue 106, wherein most recent measurements are added to the end 300 of the queue 106 (position *n*) and oldest measurements are discarded from of the front 302 of the queue 106 (position 0). Each entry in the queue stores the yaw rate of the host vehicle 200 at a particular instant in time, wherein yaw rate can be defined as the rate of change of the heading angle or rotation about the z-axis (perpendicular to the ground) of the host vehicle 200.

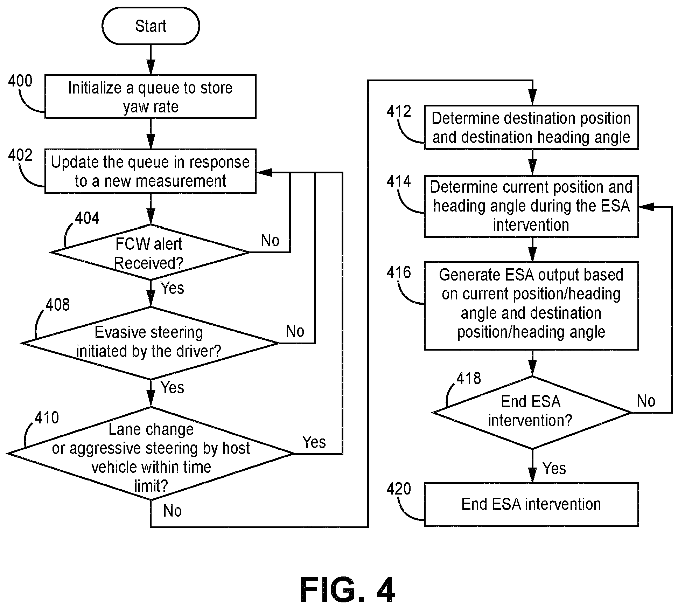

Figure 4 is a flowchart illustrating steps implemented by the ESA system according to some embodiments. At step 400, the yaw rate queue 106 is initialized to begin storing yaw rate data. At step 402, the yaw rate queue 106 is updated to store received yaw rate data. At step 404, a determination is made whether a front collision warning (FCW) has been received. As shown in Figure 1, evasive steering controller 101 may receive a FCW input 110. In some embodiments the FCW input 110 indicates whether a front collision is imminent. In other embodiments, the FCW input 110 may include raw data analyzed by the evasive steering controller 101 to determine whether a front collision is imminent. In the event that a FCW has been received, then the process continues to step 408 to determine whether the driver has initiated evasive steering. If at step 404 it is determined that no FCW has been received then the process continues at step 402 updating the yaw rate queue 106.

At step 408 a determination is made whether the driver has initiated evasive steering. As shown in Figure 1, evasive steering controller 101 may receive a steering input 108 that either identifies the presence of an evasive steering maneuver or provides inputs (e.g., steering angular rate, steering torque, lateral acceleration, lateral jerk) that are utilized to determine the presence of an evasive steering maneuver. For example, evasive steering controller 101 may compare one or more of the inputs to thresholds to determine whether an evasive steering maneuver has been initiated. If the driver has not initiated evasive steering, then no evasive steering assist (ESA) is initiated starting with step 410 and the process continues at step 402 with updating the yaw rate queue 106. If the driver has initiated evasive steering at step 408, then ESA is initiated starting at step 410. In some embodiments, initiation of ESA begins with a determination at step 410 whether the host vehicle has made a lane change or aggressive steering within a defined period of time (e.g., past several seconds). In some embodiments, the defined period of time corresponds with the length of the yaw rate queue 106 (i.e., time window defined in Figure 2). In some embodiments, the data stored in the yaw rate queue is utilized to determine whether a lane change or aggressive steering has been initiated within the defined period of time, and therefore the length of the yaw rate queue may determine the period of time that may be reviewed for a lane change or aggressive steering event. In other embodiments, the defined period of time may be separate from the yaw rate queue, and other criteria or inputs may be utilized to detect a lane change or aggressive steering event. If the host has made a lane change or aggressive steering maneuver then no ESA is initiated and the process continues at step 402 with updating of the yaw rate queue 106. If at step 410 it is determined that the host has NOT made a lane change and/or initiated an aggressive steering event then the ESA process continues at step 412. In some embodiments, a lane change and/or aggressive steering event occurring within a time frame (e.g., last four seconds) decreases the accuracy of heading angle estimates performed at step 412, and therefore prevents utilization of ESA initiation at steps 412-418. However, assuming that the host vehicle has not conducted any lane changes and/or aggressive steering events within the time frame, then ESA may be initiated at step 412.

The order in which steps 404, 408, and 410 may be modified in other embodiments. For example, in some embodiments the determination of whether the driver has initiated evasive steering at step 408 may occur before or after the determination of whether a FCW alert has been received at step 404. In some embodiments, the least costly step (i.e., lowest computational step) may before performed first in order to determine whether any subsequent analysis is required. In other embodiments, each step is performed at approximately simultaneously, wherein the decision of whether to initiate evasive steering assist (ESA) depending on the outcome of the simultaneous analysis. In still other embodiments, only a subset of steps 404, 408, and 410 is required to determine whether to initiate ESA. For example, in some embodiments, initiation of ESA may depend only on whether a FCW alert was detected at step 404, or be based only on whether the drive has initiated evasive steering at step 408.

At step 412, the destination position and destination heading angle are determined. With respect to Figure 2, the destination position and destination heading angle represent the desired position of the host vehicle at the end of the evasive steering maneuver, presumably located safely adjacent to the obstacle that caused the evasive steering maneuver (as shown by host position 208 in Figure 2). In the presence of lane markers, the lane markers may be utilized in combination with the detected position of the obstacle to determine a desired position and desired heading angle. Without the presence of lane markers, the yaw rate data stored by the yaw rate queue 106 may be utilized to calculate a desired position and desired heading angle. In some embodiments, heading angles are determined for each time step n stored in the yaw rate queue with the heading angle at the oldest time step (i.e., front of the queue) assigned a heading of zero. The heading angle at each time step associated with a stored yaw rate can be calculated by integrating the previous yaw rates. In this way, the current heading angle of the host vehicle can be determined at the current time step (i.e., at initiation of the evasive steering action). Likewise, the heading angles determined at each time step can be utilized to estimate the destination heading angle. In some embodiments, the destination heading angle is calculated as the average of the heading angles determined at each time step, wherein the assumption is that the general orientation of the host vehicle measured over a length of time is the best estimate of the desired orientation or heading of the car following the evasive steering maneuver. Likewise, the current position of the host vehicle (at the onset of the evasive steering maneuver) may be assigned a value of zero. The destination point of the host vehicle may be assigned a value based on the current position of the host vehicle and a defined safety offset value (e.g., 3 meters).

At step 414, the current position and heading angle are determined based on yaw rates stored to the yaw rate queue 106. In some embodiments, the current position is calculated based on the previous position, the previous heading angle, and velocity of the host vehicle. The current heading angle is calculated based on the previous heading angle and the most recent yaw rate stored to the yaw rate queue 106. In some embodiments, the yaw rate queue 106 is continually updated during the evasive steering maneuver, and thus updates to the yaw rate queue 106 may continue at the regular timing interval or frequency. In some embodiments, the determination of the destination position and destination heading angle at step 412 and the determination of the current position and heading angle at step 414 are performed approximately simultaneously. In some embodiments, the current position and heading angle is continually re-calculated at step 414, while the destination position and destination heading angle is calculated only once at step 412.

At step 416, an ESA output is generated based on the current position and heading angle determined at step 414 and desired position and heading angle calculated at step 412. In some embodiments, a proportional-integral-derivative (PID) control scheme may be utilized to minimize errors between the current position/heading angle and destination position/heading angle. In other embodiments, other type of control schemes may be utilized to generate the ESA output in order to minimize the difference between the current position and heading angle of the vehicle and the destination position and heading angle (i.e., to direct the car to the desired destination position and destination heading). As described above, the ESA output overlays additional steering torque on top of the driver applied steering torque, thus aiding the host vehicle in performing the evasive maneuver. In some embodiments, the ESA output is provided to the steering system, wherein the ESA output calculated at step 416 determines the direction and magnitude of the additional steering torque overlaid on top of the driver applied steering torque.

At step 418, a determination is made whether to end the ESA intervention. If at step 418 a determination is made to continue the ESA intervention then the ESA intervention continues by re-calculating the current position and heading angle at step 414 and generating a new ESA output at step 416. If at step 418 a determination is made to end the ESA intervention then the process ends at step 420. No additional ESA outputs are generated and following the end of a particular ESA intervention the process would re-start at step 400.

In some embodiments, the ESA intervention is limited to a particular length of time. In this embodiment, the determination at step 418 is whether the ESA time period has expired. For example, in some embodiments an ESA timer is started in response to the initiation of ESA and the ESA timer is compared to a threshold value (e.g., 1-3 seconds) at step 418 to determine whether to end the ESA intervention. If the ESA intervention time limit has not been reached, then the process continues by re-calculating the current position/heading angle at step 414 and controlling the ESA output generated at step 416. In other embodiments, the determination of whether to end the ESA intervention is based on whether the current position and heading angle is approximately equal to the destination position and destination heading angle. That is, once the vehicle reaches the destination position and destination heading angle, no additional ESA intervention is required. In some embodiments, a combination of methods may be utilized at step 418. For example, the process may end in response to either the vehicle reaching the destination position and heading angle or in response to the timer expiring. In this way, the ESA intervention is limited to a length of time no longer than the ESA timer, but may be terminated more quickly in response to the vehicle reaching the desired destination position and heading angle.

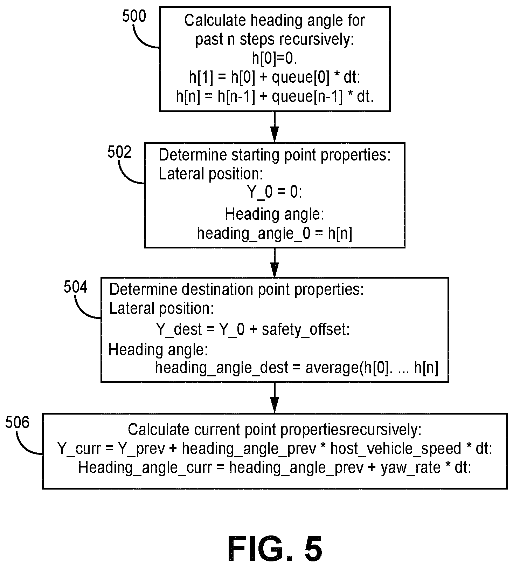

Figure 5 is a flowchart illustrating steps implemented by the ESA system to determine the destination position and destination heading angle of the host vehicle and to calculate the current position and heading angle of the host vehicle according to some embodiments. Steps 500, 502 and 504 are utilized to determine the destination position and destination heading angle according to some embodiments. Step 506 illustrates calculation of current point and current heading angle according to some embodiments.

In particular, at step 500 the heading angle for the past n steps are calculated recursively. For example, the heading angle at the earliest timestep (i.e., time zero) is set equal to zero (*h*(0) = 0). The heading angle at the next time step (i.e., time n = 1) is calculated based on the previous heading angle (in this case, *h*(0) = 0) and the integral of the yaw rate stored with respect to the host vehicle at time step zero. For example, as shown in step 500, at *t* = 1, the heading angle is calculated as *h*(1) = *h*(0) *+* yaw_rate_queue(0)**dt*. This calculation is performed iteratively for each time step. Thus, for time step *n,* the heading angle is calculated as *h*(*n*) *= h*(*n-1*) *+* yaw_rate_queue(*n*-1)**dt*.

At step 502, the starting point position and starting heading angle (corresponding with the current time step or position of the host vehicle) are determined at the onset of the evasive steering maneuver. The starting point position (in the *y* direction) is initialized to zero with respect to the starting point position (e.g., *Y_0* = 0). Likewise, the starting heading angle is initialized to the heading angle calculated at the current time step (e.g. heading_angle_start = h(*n*)), wherein the value of h(*n*) is calculated as described at step 500.

At step 504, the destination point position and destination heading angle is determined. The destination point position is calculated based on the starting point position and some offset (e.g., safety offset) that corresponds with a safe distance from the detected obstacle. For example, in some embodiments the destination point position is calculated as *Y_dest = Y_0 + safety_ offset.* In addition, the destination heading angle is calculated based on an average of the heading angles calculated leading up to initiation of the evasive maneuver. For example, in some embodiments the destination heading angle is calculated as *heading angle dest =* average(*h*(0), ..., *h*(*n*))*.* Thus, the destination heading angle (i.e., the desired heading angle at the end of the evasive maneuver) is calculated to be approximately equal to the average heading angle of the host vehicle in the seconds leading up to the initiation of the evasive maneuver, which assumes that whatever heading angle the host vehicle was on prior to the initiation of ESA (represented by the average of measured heading angles), the same heading should be provided at the end of the evasive maneuver.

At step 506, the current position and current heading angle are calculated for the host vehicle. In some embodiments the current position and current heading angles are calculated recursively. For example, the current position may be calculated as *Y_curr = Y prev + heading angle_prev*host vehicle speed * dt.* That is, for each time step the heading angle of the previous time step and the velocity of the host vehicle are utilized to calculate the position of the host vehicle in the y direction.

## Claims

1. A method of providing evasive steering assist (ESA), the method including:
storing yaw rate data related to a host vehicle (step 402), wherein yaw rate data includes a yaw rate stored at each time step from an initial time step [0] to a current time step [*n*];
determining whether to initiate ESA (steps 404, 408, 410);
in response to a determination to initiate ESA, calculating a current position, a current heading angle, a destination position, and a destination heading angle (steps 412, 414), wherein the stored yaw rate data is utilized to determine the current heading angle and the destination heading angle; and
generating an evasive steering assist (ESA) output based on the current position (step 416), the current heading angle, the destination position, and the destination heading angle.

2. The method of claim 1, wherein determining whether to initiate ESA includes at least one of:
determining whether a front collision is imminent (step 404), wherein ESA is initiated in response to a determination that a front collision is imminent;
determining whether a driver of the host vehicle has initiated evasive steering (step 408), wherein ESA is initiated in response to a determination that the driver has initiated evasive steering;
determining whether a driver of the host vehicle has completed an aggressive steering maneuver within a given time period (step 410), wherein ESA is initiated in response to a determination that the driver has not completed an aggressive steering maneuver within the given period of time.

3. The method of any one of the preceding claims, wherein calculating the current heading angle includes:
recursively calculating the heading angle of the vehicle based on the stored yaw rate data, wherein the heading angle at the initial time step [0] is assigned an initial heading angle and subsequent heading angles are calculated based on an integral of the stored yaw rate at each time step, wherein the heading angle at the current time step *n* is assigned as the current heading angle (step 500).

4. The method of claim 3, wherein the destination heading angle is calculated as an average of a plurality of heading angles calculated at each time step within a given time period (step 504), wherein the destination position is calculated as a sum of the current position of the vehicle and a safety offset value, wherein the position of the vehicle represents a lateral position of the vehicle (step 504).

5. The method of claim 3 or 4, wherein the current position of the vehicle is updated at each time step based on a previous position of the vehicle, a previous heading angle of the vehicle, and a speed of the vehicle (step 506).

6. The method of any one of claims 3 to 5, wherein the current heading angle of the vehicle is updated at each time based on a previous heading angle and measured yaw rate at a current time step (step 506).

7. The method of any one of the preceding claims, further including:
ending the ESA in response to an ESA timer expiring, wherein the ESA time is started at the initiation of the ESA (step 418).

8. The method of any one of the preceding claims, further including:
ending the ESA in response to the current position and the current heading angle being equal to the destination position and the destination heading angle (step 418).

9. The method of any one of the preceding claims, wherein the (ESA) output is generated to minimize differences between the current position and the destination position and to minimize differences between the current heading angle and the destination heading angle (step 416).

10. A system for providing evasive steering assist (ESA) to a host vehicle, the system comprising:
a first input for receiving yaw rate data (112);
an evasive steering controller (101) configured to store yaw rate data over a period of time (step 402), to initiate ESA based on one or more inputs (steps 404, 408, 410), wherein in response to a determination to initiate ESA the evasive steering controller utilizes the stored yaw rate data to determine a current position and a current heading angle of the host vehicle (steps 414), utilizes the stored yaw rate data to determine a destination heading angle (step 412), and utilizes the current position to determine a destination position (step 412), wherein based on the current position, the current heading angle, the destination position, and the destination heading angle the evasive steering controller generates an evasive steering assist (ESA) output (step 416); and
an output for communicating the ESA output (114).

11. The system of claim 10, further including:
one or more inputs for receiving one or both of forward collision warnings (FCW) (110) and steering inputs (step 108), wherein the evasive steering controller (101) determines whether to initiate ESA in response to one or both of the FCWs (110) and steering inputs (108).

12. The system of claim 11, wherein the evasive steering controller (101) initiates ESA in response to a received FCW (110) and a steering input (108) indicating that a driver of the host vehicle has initiated evasive steering (step 404, 408).

13. The system of any one of claims 10 to 12, wherein the evasive steering controller (101) recursively calculates the heading angle of the vehicle based on the stored yaw rate data (step 500), wherein the heading angle at an initial time step [0] is assigned an initial heading angle and subsequent heading angles are calculated based on an integral of the stored yaw rate at each time step, wherein the heading angle at a current time step n is assigned as the current heading angle.

14. The system of claim 13, wherein the destination heading angle is calculated as an average of a plurality of heading angles calculated at each time step within a given time period (step 504), and wherein the destination position is calculated as a sum of the current position of the vehicle and a safety offset value, wherein the position of the vehicle represents a lateral position of the vehicle (step 504).

15. The system of any one of claims 10 to 14, wherein the evasive steering controller (101) generates the ESA output (114) to minimize a difference between the current position, current position heading angle and the destination position and destination heading angle (step 416).

## Patentansprüche

1. Verfahren zum Bereitstellen einer Ausweichlenkunterstützung (ESA), wobei das Verfahren umfasst:
Speichern von Gierratendaten, die sich auf ein Host-Fahrzeug beziehen (Schritt 402), wobei die Gierratendaten eine Gierrate umfassen, die bei jedem Zeitschritt von einem Anfangszeitschritt [0] bis zu einem aktuellen Zeitschritt [n] gespeichert wird;
Bestimmen, ob die ESA initiiert werden soll (Schritte 404, 408, 410);
als Reaktion auf eine Bestimmung, die ESA zu initiieren, Berechnen einer aktuellen Position, eines aktuellen Kurswinkels, einer Zielposition und eines Zielkurswinkels (Schritte 412, 414), wobei die gespeicherten Gierratendaten verwendet werden, um den aktuellen Kurswinkel und den Zielkurswinkel zu bestimmen; und
Erzeugen einer Ausgabe der Ausweichlenkunterstützung (ESA) basierend auf der aktuellen Position (Schritt 416), dem aktuellen Kurswinkel, der Zielposition und dem Zielkurswinkel.

2. Verfahren nach Anspruch 1, wobei das Bestimmen, ob die ESA initiiert werden soll, mindestens eines umfasst von:
Bestimmen, ob eine Frontalkollision bevorsteht (Schritt 404), wobei die ESA als Reaktion auf eine Bestimmung, dass eine Frontalkollision bevorsteht, initiiert wird;
Bestimmen, ob ein Fahrer des Host-Fahrzeugs die Ausweichlenkung initiiert hat (Schritt 408), wobei die ESA als Reaktion auf eine Bestimmung, dass der Fahrer die Ausweichlenkung initiiert hat, initiiert wird;
Bestimmen, ob ein Fahrer des Host-Fahrzeugs ein aggressives Lenkmanöver innerhalb eines gegebenen Zeitraums abgeschlossen hat (Schritt 410), wobei die ESA als Reaktion auf eine Bestimmung, dass der Fahrer kein aggressives Lenkmanöver innerhalb des gegebenen Zeitraums abgeschlossen hat, initiiert wird.

3. Verfahren nach einem der vorhergehenden Ansprüche, wobei das Berechnen des aktuellen Kurswinkels umfasst:
rekursives Berechnen des Kurswinkels des Fahrzeugs basierend auf den gespeicherten Gierratendaten, wobei dem Kurswinkel bei dem Anfangszeitschritt [0] ein Anfangskurswinkel zugewiesen wird und nachfolgende Kurswinkel basierend auf einem Integral der gespeicherten Gierrate bei jedem Zeitschritt berechnet werden, wobei der Kurswinkel bei dem aktuellen Zeitschritt n als der aktuelle Kurswinkel zugewiesen wird (Schritt 500).

4. Verfahren nach Anspruch 3, wobei der Zielkurswinkel als ein Durchschnitt einer Vielzahl von Kurswinkeln berechnet wird, die bei jedem Zeitschritt innerhalb eines gegebenen Zeitraums berechnet werden (Schritt 504), wobei die Zielposition als eine Summe der aktuellen Position des Fahrzeugs und eines Sicherheitsversatzwerts berechnet wird, wobei die Position des Fahrzeugs eine Lateralposition des Fahrzeugs darstellt (Schritt 504).

5. Verfahren nach Anspruch 3 oder 4, wobei die aktuelle Position des Fahrzeugs bei jedem Zeitschritt basierend auf einer vorherigen Position des Fahrzeugs, einem vorherigen Kurswinkel des Fahrzeugs und einer Geschwindigkeit des Fahrzeugs aktualisiert wird (Schritt 506).

6. Verfahren nach einem der Ansprüche 3 bis 5, wobei der aktuelle Kurswinkel des Fahrzeugs bei jedem Zeitpunkt basierend auf einem vorherigen Kurswinkel und einer gemessenen Gierrate bei einem aktuellen Zeitschritt aktualisiert wird (Schritt 506).

7. Verfahren nach einem der vorhergehenden Ansprüche, ferner umfassend: Beenden der ESA als Reaktion darauf, dass ein ESA-Timer abläuft, wobei die ESA-Zeit bei der Initiierung der ESA gestartet wird (Schritt 418).

8. Verfahren nach einem der vorhergehenden Ansprüche, ferner umfassend: Beenden der ESA als Reaktion darauf, dass die aktuelle Position und der aktuelle Kurswinkel gleich der Zielposition und dem Zielkurswinkel sind (Schritt 418).

9. Verfahren nach einem der vorhergehenden Ansprüche, wobei die Ausgabe der ESA erzeugt wird, um Unterschiede zwischen der aktuellen Position und der Zielposition zu minimieren und um Unterschiede zwischen dem aktuellen Kurswinkel und dem Zielkurswinkel zu minimieren (Schritt 416).

10. System zum Bereitstellen einer Ausweichlenkunterstützung (ESA) für ein Host-Fahrzeug, wobei das System umfasst:
eine erste Eingabe zum Empfangen von Gierratendaten (112);
einen Ausweichlenkungs-Controller (101), der konfiguriert ist, um Gierratendaten über einen Zeitraum zu speichern (Schritt 402), um die ESA basierend auf einer oder mehreren Eingaben zu initiieren (Schritte 404, 408, 410), wobei der Ausweichlenkungs-Controller als Reaktion auf eine Bestimmung, die ESA zu initiieren, die gespeicherten Gierratendaten verwendet, um eine aktuelle Position und einen aktuellen Kurswinkel des Host-Fahrzeugs zu bestimmen (Schritte 414), die gespeicherten Gierratendaten verwendet, um einen Zielkurswinkel zu bestimmen (Schritt 412), und die aktuelle Position verwendet, um eine Zielposition zu bestimmen (Schritt 412), wobei der Ausweichlenkungs-Controller basierend auf der aktuellen Position, dem aktuellen Kurswinkel, der Zielposition und dem Zielkurswinkel eine Ausgabe der Ausweichlenkunterstützung (ESA) erzeugt (Schritt 416); und
eine Ausgabe zum Kommunizieren der ESA-Ausgabe (114).

11. System nach Anspruch 10, ferner umfassend:
eine oder mehrere Eingaben zum Empfangen einer oder beider von Vorwärtskollisionswarnungen (FCW) (110) und Lenkeingaben (Schritt 108),
wobei der Ausweichlenkungs-Controller (101) bestimmt, ob die ESA als Reaktion auf eine oder beide der FCW (110) und Lenkeingaben (108) initiiert werden soll.

12. System nach Anspruch 11, wobei der Ausweichlenkungs-Controller (101) die ESA als Reaktion auf eine empfangene FCW (110) und eine Lenkeingabe (108), die anzeigt, dass ein Fahrer des Host-Fahrzeugs die Ausweichlenkung initiiert hat, initiiert (Schritt 404, 408).

13. System nach einem der Ansprüche 10 bis 12, wobei der Ausweichlenkungs-Controller (101) den Kurswinkel des Fahrzeugs basierend auf den gespeicherten Gierratendaten rekursiv berechnet (Schritt 500), wobei dem Kurswinkel bei einem Anfangszeitschritt [0] ein Anfangskurswinkel zugewiesen wird und nachfolgende Kurswinkel basierend auf einem Integral der gespeicherten Gierrate bei jedem Zeitschritt berechnet werden, wobei der Kurswinkel bei einem aktuellen Zeitschritt n als der aktuelle Kurswinkel zugewiesen wird.

14. System nach Anspruch 13, wobei der Zielkurswinkel als ein Durchschnitt einer Vielzahl von Kurswinkeln berechnet wird, die bei jedem Zeitschritt innerhalb eines gegebenen Zeitraums berechnet werden (Schritt 504), und wobei die Zielposition als eine Summe der aktuellen Position des Fahrzeugs und eines Sicherheitsversatzwerts berechnet wird, wobei die Position des Fahrzeugs eine Lateralposition des Fahrzeugs darstellt (Schritt 504).

15. System nach einem der Ansprüche 10 bis 14, wobei der Ausweichlenkungs-Controller (101) die ESA-Ausgabe (114) erzeugt, um einen Unterschied zwischen der aktuellen Position, dem aktuellen Positionskurswinkel und der Zielposition und dem Zielkurswinkel zu minimieren (Schritt 416).

## Revendications

1. Procédé pour fournir une assistance à la direction d'évitement (ESA, evasive steering assist), le procédé incluant les étapes consistant à :
stocker des données de taux de lacet en lien avec un véhicule hôte (étape 402), les données de taux de lacet incluant un taux de lacet stocké à chaque étape temporelle depuis une étape temporelle initiale [0] jusqu'à une étape temporelle actuelle [*n*] ;
déterminer s'il faut forcer amorcer l'ESA (étapes 404, 408, 410) ;
en réponse à une détermination selon laquelle il faut amorcer l'ESA, calculer une position actuelle, un angle de cap actuel, une position de destination, et un angle de cap de destination (étapes 412, 414), les données de taux de lacet stockées étant utilisées pour déterminer l'angle de cap actuel et l'angle de cap de destination ; et
générer une assistance à la direction d'évitement (ESA) sortie sur la base de la position actuelle (étape 416), de l'angle de cap actuel, de la position de destination, et de l'angle de cap de destination.

2. Procédé selon la revendication 1, dans lequel l'étape consistant à déterminer s'il faut amorcer l'ESA inclut l'une au moins des étapes consistant à :
déterminer si une collision à l'avant est imminente (étape 404), l'ESA étant amorcée en réponse à une détermination selon laquelle une collision à l'avant est imminente ;
déterminer si un conducteur du véhicule hôte a amorcé une direction d'évitement (étape 408), l'ESA étant amorcée en réponse à une détermination selon laquelle le conducteur a amorcé une direction d'évitement ;
déterminer si un conducteur du véhicule hôte a effectué une manœuvre de direction agressive à l'intérieur d'un laps de temps donné (étape 410), l'ESA étant amorcée en réponse à une détermination selon laquelle le conducteur n'a pas effectué de manœuvre de direction agressive à l'intérieur du laps de temps donné.

3. Procédé selon l'une quelconque des revendications précédentes, dans lequel l'étape consistant à calculer l'angle de cap actuel inclut de :
calculer de manière récursive l'angle de cap du véhicule sur la base des données de taux de lacet stockées, l'angle de cap à l'étape de temps initial [0] étant associé à un angle de cap initial et des angles de cap suivants étant calculés sur la base d'une intégrale du taux de lacet stocké à chaque étape temporelle, l'angle de cap à l'étape temporelle actuelle n étant associé à titre d'angle de cap actuel (étape 500).

4. Procédé selon la revendication 3, dans lequel l'angle de cap de destination est calculé à titre de moyenne d'une pluralité d'angles de cap calculés à chaque étape temporelle à l'intérieur d'un laps de temps donné (étape 504), dans lequel la position de destination est calculée à titre de somme de la position actuelle du véhicule et d'une valeur de décalage de sécurité, la position du véhicule représentant une position latérale du véhicule (étape 504).

5. Procédé selon la revendication 3 ou 4, dans lequel la position actuelle du véhicule est mise à jour à chaque étape temporelle sur la base d'une position précédente du véhicule, d'un angle de cap précédent du véhicule, et d'une vitesse du véhicule (étape 506).

6. Procédé selon l'une quelconque des revendications 3 à 5, dans lequel l'angle de cap actuel du véhicule est mis à jour à chaque temps sur la base d'un angle de cap précédent et d'un taux de lacet mesuré à une étape temporelle actuelle (étape 506).

7. Procédé selon l'une quelconque des revendications précédentes, incluant en outre :
terminer l'ESA en réponse à une expiration d'une minuterie d'ESA, dans lequel le temps d'ESA est démarré à l'amorçage de l'ESA (étape 418).

8. Procédé selon l'une quelconque des revendications précédentes, incluant en outre l'étape consistant à :
terminer l'ESA en réponse au fait que la position actuelle et l'angle de cap actuel sont identiques à la position de destination et à l'angle de cap de destination (étape 418).

9. Procédé selon l'une quelconque des revendications précédentes, dans lequel la sortie d'ESA est générée pour minimiser des différences entre la position actuelle et la position de destination et pour minimiser des différences entre l'angle de cap actuel et l'angle de cap de destination (étape 416).

10. Système destiné à fournir une assistance à la direction d'évitement (ESA, evasive steering assist) d'un véhicule hôte (102), le système comprenant :
une première entrée destinée à recevoir des données de taux de lacet (112) ;
un contrôleur de direction d'évitement (5) configuré pour stocker des données de taux de lacet sur un laps de temps (étape 402), pour amorcer l'ESA sur la base d'une ou de plusieurs entrées (étapes 404, 408, 410), dans lequel en réponse à une détermination selon laquelle il faut amorcer l'ESA, le contrôleur de direction d'évitement utilise les données de taux de lacet stockées pour déterminer une position actuelle et un angle de cap actuel du véhicule hôte (étape 414), utilise les données de taux de lacet stockées pour déterminer un angle de cap de destination (étape 412), et utilise la position actuelle pour déterminer une position de destination (étape 412), dans lequel, sur la base de la position actuelle, de l'angle de cap actuel, de la position de destination, et de l'angle de cap de destination, le contrôleur de direction d'évitement génère une sortie d'assistance à la direction d'évitement (ESA) (étape 416) ; et
une sortie destinée à communiquer la sortie d'ESA (114).

11. Système selon la revendication 10, incluant en outre :
une ou plusieurs entrées destinées à recevoir l'un ou l'autre, ou les deux, d'avertissements de collision à l'avant (FCW) (110) et d'entrées de direction (étape 108), dans lequel le contrôleur de direction d'évitement (101) détermine s'il faut amorcer l'ESA en réponse à l'une ou l'autre ou les deux des FCW (110) et des entrées de direction (108).

12. Système selon la revendication 11, dans lequel le contrôleur de direction d'évitement (101) amorce l'ESA en réponse à un FCW reçu (110) et à une entrée de direction (108) indiquant qu'un conducteur du véhicule hôte a amorcé une direction d'évitement (étapes 404, 408).

13. Système selon l'une quelconque des revendications 10 à 12, dans lequel le contrôleur de direction d'évitement (101) calcule de manière récursive l'angle de cap du véhicule sur la base des données de lacet stockées (étape 500), l'angle de cap à un étape temporelle initiale [0] étant associé à un angle de cap initial et des angles de cap suivants étant calculés sur la base d'une intégrale du taux de lacet stocké à chaque étape temporelle, dans lequel l'angle de cap à une étape temporelle actuelle n est associé à titre d'angle de cap actuel.

14. Système selon la revendication 13, dans lequel l'angle de cap de destination est calculé à titre de moyenne d'une pluralité d'angles de cap calculés à chaque étape temporelle à l'intérieur d'un laps de temps donné (étape 504), et dans lequel la position de destination est calculée à titre de somme de la position actuelle du véhicule et d'une valeur de décalage de sécurité, la position du véhicule représentant une position latérale du véhicule (étape 504).

15. Système selon l'une quelconque des revendications 10 à 14, dans lequel le contrôleur de direction d'évitement (101) génère la sortie d'ESA (114) pour minimiser une différence entre la position actuelle, l'angle de cap de position actuelle et la position de destination et l'angle de cap de destination (étape 416).
